# DEMANDE DE BREVET EUROPEEN

(11) **EP 2 660 085 A1**
(43) Date de publication de la demande: **06.11.2013**
(21) Numéro de dépôt: 12305496.7
(22) Date de dépôt: 03.05.2012
(51) Int. Cl.: B60H 1/00, B60H 1/24

(54) **Caisson de pressurisation pour cabine d'engin**

(71) Demandeur: Kalori, 69330 Pusignan (FR)
(72) Inventeur: Ferreira, Frédéric, 38790 St Georges D'Esperanche (FR); Combe, Laurent, 01150 Leyment (FR)
(74) Mandataire: Chevalier, Renaud Philippe

(57) **Abrégé**

Le caisson (2) est prévu pour insuffler à l"intérieur d'une cabine (1) de l'air à une pression (Pi) supérieure à la pression extérieure (Pe).

Il comprend, d'amont en aval, une entrée d'air (3), une unité de filtration (6), des moyens de détection (14) du débit d'air (D), un ensemble de ventilation (8, 9, 10), une sortie d'air (4, 11) raccordée à l'intérieur de la cabine (1). Une unité électronique (12), reliée aux moyens de détection (14) ainsi qu'à au moins un capteur de pression (16), détermine l'écart (ΔP) entre la pression intérieure (Pi) et la pression extérieure (Pe) et pilote l'ensemble de ventilation (8, 9, 10) de manière à maintenir cet écart.

Application : engins de travaux publics, machines agricoles, engins de levage et de manutention.

## Description

La présente invention est relative à un caisson de pressurisation, destiné à pressuriser une cabine d'engin. Ce caisson est destiné notamment à la pressurisation des cabines de conduite d'engins roulants, tels que des engins de travaux publics, des tracteurs et machines agricoles, des engins de manutention et de levage, ou similaires. Le même caisson est aussi applicable à la pressurisation de cabines appartenant à des installations fixes, telles que des cabines de conduite d'installations dans l'industrie chimique.

Dans certains domaines d'activité, les cabines d'engins doivent être pressurisées, afin d'éviter que des produits nocifs et dangereux pour l'homme ne pénètrent dans la cabine à l'intérieur de laquelle prend place le conducteur de l'engin.

A ce jour, il existe des caissons de pressurisation pour cabine d'engins, mais ces caissons ne réalisent pas un contrôle efficace du débit et de la pression de l'air envoyé à l'intérieur de la cabine. Ainsi, ces caissons possèdent des performances suffisantes au début de la vie de la cabine qui en est équipée. Par contre, les mêmes caissons peuvent se révéler insuffisants dans le temps, en raison des problèmes de vieillissement des joints d'étanchéité et par conséquent d'apparition de fuites d'air qui modifient la pression à l'intérieur de la cabine.

La présente invention vise à apporter une solution à ces problèmes, par un contrôle approprié du débit d'air insufflé dans la cabine et de la pression d'air régnant à l'intérieur de la cabine, de manière à compenser les pertes de performances dues notamment au vieillissement des joints.

A cet effet, l'invention a pour objet un caisson de pressurisation pour cabine d'engin, le caisson de pressurisation étant prévu pour insuffler à l'intérieur d'une cabine de l'air à une pression supérieure à la pression d'air extérieure, ce caisson étant essentiellement caractérisé par le fait qu'il comprend, d'amont en aval par référence au sens de circulation de l'air :
- une entrée d'air, telle qu'une grille,
- une unité de filtration de l'air,
- des moyens de détection du débit d'air,
- un ensemble de ventilation,
- une sortie d'air prévue pour être raccordée à l'intérieur de la cabine à pressuriser, de préférence avec interposition d'une unité de climatisation,

le caisson de pressurisation comprenant encore une unité de contrôle, en particulier une unité électronique, reliée aux moyens de détection du débit d'air ainsi qu'à au moins un capteur de pression à partir duquel est déterminé l'écart de pressions entre la pression d'air régnant à l'intérieur de la cabine et la pression d'air extérieure, l'unité de contrôle étant prévue pour piloter l'ensemble de ventilation de manière à maintenir l'écart de pressions précité et le débit d'air à une valeur prédéfinie ou entre des valeurs prédéfinies.

Dans un mode de réalisation préféré du caisson de pressurisation objet de l'invention, ce caisson comprend, en amont de l'ensemble de ventilation, un canal de mesure recueillant l'air entrant filtré, les moyens de détection du débit d'air étant placés sur le canal de mesure.

Avantageusement, l'unité de contrôle, en particulier l'unité électronique, est reliée à un capteur de pression différentiel délivrant directement à cette unité un signal représentatif de l'écart de pressions entre l'intérieur et l'extérieur de la cabine.

Dans un mode de réalisation du caisson de pressurisation objet de l'invention, l'ensemble de ventilation de ce caisson comprend deux groupes moto-ventilateurs montés en série, les moteurs électriques respectifs de ces deux groupes étant pilotés à partir de l'unité de contrôle, en particulier de l'unité électronique. Le premier groupe moto-ventilateur réalise une première compression de l'air, qui est repris et pulsé vers la sortie du caisson, donc vers la cabine à pressuriser, par le second groupe moto-ventilateur.

Dans l'ensemble, on obtient ainsi un caisson de pressurisation qui, tout en restant simple et compact, permet de souffler de l'air filtre vers l'intérieur d'une cabine d'engin, en maintenant cet air à une pression supérieure à la pression extérieure par un pilotage adapté des deux groupes moto-ventilateurs, l'unité électronique de contrôle gérant en particulier la vitesse de rotation de la turbine de chaque groupe moto-ventilateur.

De plus, ce caisson de pressurisation régule le débit d'air qui le traverse et qui est donc envoyé vers la cabine, la température de cet air pouvant en outre être régulée par l'ajout d'une unité de climatisation. Le contrôle de la pressurisation de la cabine et du débit d'air, traité par le filtre et envoyé vers cette cabine, se font automatiquement et d'une manière permettant de compenser les éventuelles fuites d'air dues notamment au vieillissement des joints d'étanchéité.

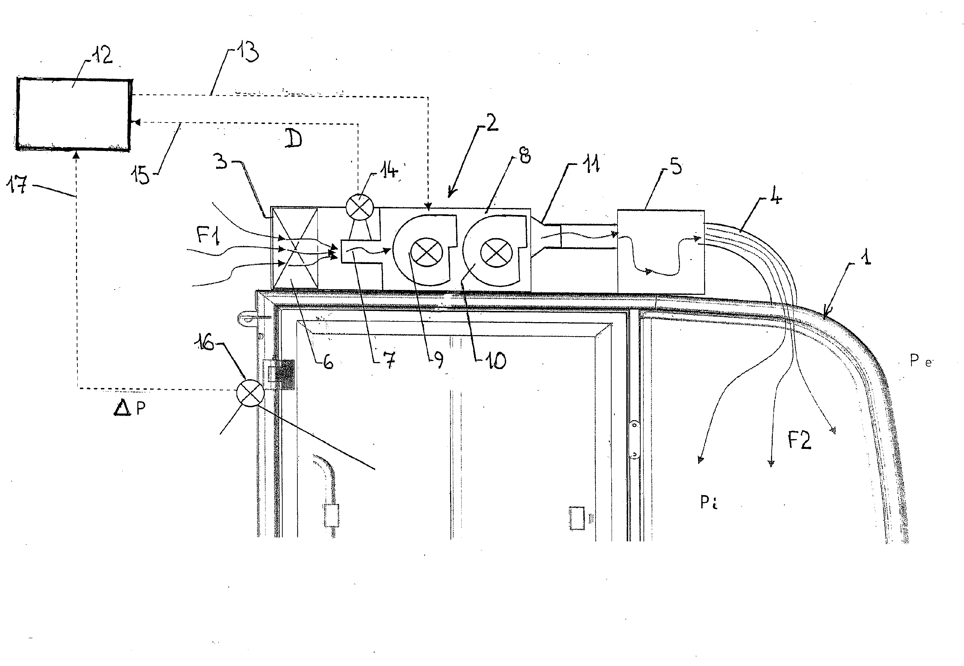

L'invention sera mieux comprise à l'aide de la description qui suit, en référence au dessin schématique annexé représentant, à titre d'exemple, une forme d'exécution de ce caisson de pressurisation pour cabine d'engin.

L'unique figure du dessin montre partiellement une cabine 1 appartenant à un engin (lui-même non représenté), la cabine 1 portant sur son toit un caisson de pressurisation 2, représenté en coupe longitudinale.

Le caisson de pressurisation 2 est prévu pour aspirer de l'air extérieur, suivant les flèches F1, au travers d'une grille arrière 3, et pour envoyer de l'air filtre et sous pression vers l'intérieur de la cabine 1, par un conduit de sortie 4, comme illustré par les flèches F2. Une unité de climatisation 5, intercalée sur le conduit de sortie 4 du caisson de pressurisation 2, permet de chauffer ou de refroidir l'air pressurisé envoyé par ledit caisson de pressurisation 2 vers l'intérieur de la cabine 1.

Le caisson de pressurisation 2 lui-même contient, d'amont en aval (par référence au sens de circulation de l'air) :
- une unité de filtration 6 de l'air, placée juste après la grille arrière 3,
- un canal de mesure 7 recueillant l'air entrant aspiré et filtré, et débouchant dans une chambre 8,
- un premier groupe moto-ventilateur 9, en particulier avec un ventilateur de type radial, placé dans la chambre 8,
- un second groupe moteur-ventilateur 10, en particulier avec un ventilateur de type radial, placé lui aussi dans la chambre 8,
- un raccord de sortie 11, reliant la chambre 8 au départ du conduit de sortie 4.

Les deux groupes moto-ventilateurs 9 et 10 sont montés « en série », le premier groupe moto-ventilateur 9 soufflant l'air dans une préchambre de compression dans laquelle se situe le second groupe moto-ventilateur 10, qui reprend l'air et le souffle dans un collecteur d'air, lui-même en communication avec le raccord de sortie 11 (la préchambre de compression et le collecteur d'air n'étant pas individualisés sur le schéma).

Les deux groupes moto-ventilateurs 9 et 10, supposés situés dans le même plan et dans le même sens pour les besoins du dessin, peuvent être placés dans des plans différents et/ou dans des sens différents, par exemple l'un perpendiculairement à l'autre, pour une utilisation optimale de l'espace disponible à l'intérieur du caisson de pressurisation 2 et en particulier de la chambre 8.

Le caisson de pressurisation 2 comprend encore une unité électronique 12 de contrôle, qui reçoit à ses entrées les signaux de divers capteurs et qui possède des sorties 13 dirigées vers les deux groupes moto-ventilateurs 9 et 10.

Un capteur 14 de mesure de vitesse d'air est placé sur le canal de mesure 7, pour délivrer à une première entrée 15 de l'unité électronique 12 un signal D proportionnel au débit d'air entrant dans la chambre 8.

A cet effet, le canal de mesure 7 peut posséder une structure spécifique (non illustrée en détail), avec deux tronçons cylindriques séparés par un rétreint, ajusté pour constituer une perte de charge calibrée, le capteur 14 se greffant sur ce rétreint.

Un autre capteur 16, qui est un capteur de pression différentiel, est placé sur la paroi de la cabine 1 pour délivrer à une seconde entrée 17 de l'unité électronique 12 un signal Zip, représentatif de l'écart entre la pression d'air Pi réglant à l'intérieur de la cabine 1 et la pression d'air extérieure Pe.

L'unité électronique 12 est aussi prévue pour enregistrer diverses valeurs de consigne, en particulier une consigne de débit d'air minimum et une consigne de débit d'air maximum, ainsi qu'un écart de pression minimum et un écart de pression maximum admissibles entre la pression d'air intérieure Pi et la pression d'air extérieure Pe.

En fonctionnement, l'unité électronique 12 compare à ces valeurs de consigne les signaux de mesure reçus à ses entrées 15 et 17, à savoir le signal D représentatif du débit d'air instantané et le signal Zip représentatif de l'écart réel entre la pression d'air intérieure Pi et la pression d'air extérieure Pe.

En fonction du résultat de cette comparaison, l'unité électronique 12 pilote par sa sortie 13 les deux groupes moto-ventilateurs 9 et 10, de manière à maintenir l'écart réel de pressions entre les valeurs minimum et maximum enregistrées, tout en envoyant à l'intérieur de la cabine 1 un débit d'air toujours supérieur à la consigne de débit d'air minimum et inférieur à la consigne de débit d'air maximum.

Selon le type de moteur électrique équipant les deux groupes moto-ventilateurs 9 et 10, le pilotage de ces derniers est réalisable par variation de la tension électrique d'alimentation de ces moteurs, ou par hachage du courant d'alimentation notamment avec une modulation de largueur d'impulsions, ou toute autre technique permettant d'adapter la vitesse de rotation des moteurs électriques, donc aussi des turbines de ces deux groupe moto-ventilateurs 9 et 10.

Ainsi, l'intérieur de la cabine 1 est alimenté en air filtré, maintenu à une pression Pi supérieure à la pression extérieure Pe, l'écart de pressions ΔP étant par exemple de l'ordre de 20 Pa, cet air pouvant en outre être chauffé ou refroidi par l'unité de climatisation 5, en fonction de la température extérieure, de manière à climatiser la cabine 1.

Comme il va de soi, l'invention ne se limite pas à la seule forme d'exécution de ce caisson de pressurisation pour cabine d'engin qui a été décrite ci-dessus, à titre d'exemple ; elle en embrasse, au contraire, toutes les variantes de réalisation et d'application, entrant dans le cadre des revendications annexées.

C'est ainsi, notamment, que l'on ne s'éloignerait pas du cadre de l'invention, telle que définie dans les revendications :
- en modifiant l'agencement des divers composants, tels que les deux groupes moto-ventilateurs, à l'intérieur du caisson de pressurisation,
- en modifiant le nombre de ces groupes moto-ventilateurs, du moment qu'il existe un ensemble de ventilation,
- en modifiant la localisation de l'unité électronique, laquelle peut être positionnée à l'intérieur du caisson de pressurisation ou à l'intérieur de la cabine, ou encore être déportée à l'extérieur,
- en montant le caisson de pressurisation en toute position, et dans toute orientation telle que verticale ou horizontale, relativement à la cabine à pressuriser,
- en ayant recours à tous équivalents, notamment pour les capteurs, le capteur de vitesse d'air étant remplaçable par un capteur de toute autre grandeur physique représentative du débit d'air, et le capteur différentiel de pression étant remplaçable par deux sondes indépendantes indiquant l'une la pression d'air à l'intérieur de la cabine, et l'autre la pression d'air à l'extérieur de la cabine,
- en destinant ce caisson de pressurisation à des cabines de conduite d'engins de toutes sortes, ou encore à toutes enceintes analogues, nécessitant d'être alimentées en air filtré, purifié ou décontaminé, en surpression par rapport à la pression extérieure.

## Revendications

1. Caisson de pressurisation pour cabine d'engin, le caisson de pressurisation (2) étant prévu pour insuffler à l'intérieur d'une cabine (1) de l'air à une pression (Pi) supérieure à la pression d'air extérieure (Pe), **caractérisé en ce qu'**il comprend, d'amont en aval par référence au sens de circulation de l'air :
- une entrée d'air, telle qu'une grille (3),
- une unité de filtration (6) de l'air,
- des moyens de détection (14) du débit d'air (D),
- un ensemble de ventilation (8, 9, 10),
- une sortie d'air (4, 11) prévue pour être raccordée à l'intérieur de la cabine (1) à pressuriser, de préférence avec interposition d'une unité de climatisation (5),
le caisson de pressurisation (2) comprenant encore une unité de contrôle, en particulier une unité électronique (12), reliée aux moyens de détection (14) du débit d'air (D) ainsi qu'à au moins un capteur de pression (16) à partir duquel est déterminé l'écart de pressions (ΔP) entre la pression d'air (Pi) régnant à l'intérieur de la cabine (1) et la pression d'air extérieure (Pe), l'unité de contrôle étant prévue pour piloter l'ensemble de ventilation (8, 9, 10) de manière à maintenir l'écart de pressions (ΔP) précité et le débit d'air (D) à une valeur prédéfinie ou entre des valeurs prédéfinies.

2. Caisson de pressurisation selon la revendication 1, **caractérisé en ce qu'**il comprend, en amont de l'ensemble de ventilation (8, 9, 10), un canal de mesure (7) recueillant l'air entrant filtré, les moyens de détection (14) du débit d'air (D) étant placés sur le canal de mesure (7).

3. Caisson de pressurisation selon la revendication 1 ou 2, **caractérisé en ce que** l'unité de contrôle, en particulier l'unité électronique (12), est reliée à un capteur de pression différentiel (16) délivrant directement à cette unité un signal représentatif de l'écart de pressions (ΔP) entre l'intérieur et l'extérieur de la cabine (1).

4. Caisson de pressurisation selon l'une des revendications 1 à 3, **caractérisé en ce que** l'ensemble de ventilation de ce caisson comprend deux groupes moto-ventilateurs (9, 10) montés en série, les moteurs électriques respectifs de ces deux groupes étant pilotés à partir de l'unité de contrôle, en particulier de l'unité électronique (12).

5. Caisson de pressurisation selon l'une des revendications 1 à 4, **caractérisé en ce que** l'unité électronique (12) de contrôle est prévue pour enregistrer une consigne de débit d'air minimum et une consigne de débit d'air maximum, ainsi qu'un écart de pressions minimum et un écart de pressions maximum entre la pression d'air intérieure (Pi) et la pression d'air extérieure (Pe), l'unité électronique (12) étant aussi prévue pour, en fonctionnement, comparer à ces valeurs de consigne le signal représentatif du débit d'air (D) instantané et le signal représentatif de l'écart de pressions (ΔP) réel entre la pression d'air intérieure (Pi) et la pression d'air extérieure (Pe).
